# EUROPEAN PATENT APPLICATION

(11) **EP 4 814 629 A1**
(43) Date of publication of application: **30.09.2026**
(21) Application number: 25787045.1
(22) Date of filing: 25.03.2025
(51) Int. Cl.: G04G 17/06, G04G 17/04, G04G 17/08, G04G 21/04, G06F 1/16, H01Q 1/27, H01Q 5/307

(54) **WEARABLE ELECTRONIC DEVICE INCLUDING ANTENNA**

(30) Priority: 08.04.2024 KR 20240047352; 19.04.2024 KR 20240052440
(71) Applicant: Samsung Electronics Co., Ltd., Suwon-si, Gyeonggi-do 16677 (KR)
(72) Inventor: PARK, Chungsoon, Suwon-si, Gyeonggi-do 16677 (KR); KIM, Hyuksu, Suwon-si, Gyeonggi-do 16677 (KR); KIM, Kijung, Suwon-si, Gyeonggi-do 16677 (KR); AHN, Jeongho, Suwon-si, Gyeonggi-do 16677 (KR)
(74) Representative: Gulde & Partner
(86) International application number: PCT/KR2025/003785
(87) International publication number: WO 2025/216453

(57) **Abstract**

The present invention relates to a wearable electronic device comprising: a housing including a first frame that includes a conductive material, a second frame that is spaced apart from the first frame in a first direction and includes a conductive material, and a side member that is arranged between the first frame and the second frame and includes a non-conductive material; a printed circuit board arranged on the housing; a wireless communication circuit electrically connected to the first frame and the second frame to transmit and receive a wireless signal in at least one frequency band; a first antenna member electrically connecting the first frame to the wireless communication circuit; and a second antenna member electrically connecting the second frame to the wireless communication circuit.

## Description

### [Technical Field]

Various embodiments disclosed herein relate to a wearable electronic device including an antenna.

### [Background Art]

With technological development, following user terminals such as smartphones and tablets, wearable electronic devices (e.g., smart watches) have become increasingly widespread. A wearable electronic device may include a smart watch worn on a body part of a user (e.g., a wrist) and configured to perform various functions. A wearable electronic device may perform a wireless communication function. For example, a wearable electronic device may transmit and/or receive wireless communication signals by utilizing a housing, which forms an external appearance and is formed of metal, as an antenna radiator.

The above information may be provided as related art for the purpose of facilitating an understanding of the disclosure. No assertion or determination is made as to whether any of the foregoing may be considered prior art with respect to the present disclosure.

### [Disclosure of Invention]

### [Technical Problem]

A wearable electronic device, such as a smart watch, needs to be manufactured in a small size due to characteristics of use. The wearable electronic device may require an antenna installation technology that efficiently uses a limited internal space. For example, the wearable electronic device may transmit and receive wireless signals by using at least a portion of a housing forming an external appearance as a radiator of an antenna. For example, the wearable electronic device may support 3G, LTE, GPS, Wi-Fi, and Bluetooth frequency bands through the housing.

The wearable electronic device is required to have an antenna function in various environments (e.g., various frequency bands). Accordingly, the wearable electronic device may require a new antenna structure to perform an antenna function in various frequency bands.

Meanwhile, when the housing is used as an antenna radiator, a strong electric field may be generated in a space between the housing in which a display is disposed and a display panel. In order to improve visibility of the display, a black matrix (BM) region of the display tends to be gradually reduced. In this case, the space between the housing and the display panel may be reduced. For example, as the display panel is expanded to a region corresponding to the reduced BM region, an active area (A/A) region may be increased. Accordingly, the space between the display panel and the housing may be reduced. In this case, the intensity of current generated in the space between the housing and the display panel may be reduced or a current flow may be obstructed, and thus an antenna function through the housing may be reduced or degraded.

The technical subjects pursued in the disclosure are not limited to the above-described technical subjects, and other technical subjects not mentioned herein may be clearly understood from the following description by those skilled in the art to which the disclosure pertains.

### [Solution to Problem]

According to an embodiment disclosed herein, a wearable electronic device may include a housing including a first frame including a conductive material, a second frame spaced apart from the first frame in a first direction and including a conductive material, and a lateral member disposed between the first frame and the second frame and including a nonconductive material. In an embodiment, the wearable electronic device may include a printed circuit board disposed in the housing. In an embodiment, the wearable electronic device may include a wireless communication circuit disposed on the printed circuit board and electrically connected to the first frame and the second frame to transmit or receive a wireless signal in at least one frequency band. In an embodiment, the wearable electronic device may include a first antenna member electrically connecting the wireless communication circuit and the first frame. In an embodiment, the wearable electronic device may include a second antenna member electrically connecting the wireless communication circuit and the second frame.

According to an embodiment disclosed herein, a wearable electronic device may include a housing including a first frame including a conductive material, a second frame spaced apart from the first frame in a first direction and including a conductive material, and a lateral member disposed between the first frame and the second frame and including a nonconductive material. In an embodiment, the wearable electronic device may include a first segmentation portion which segments the first frame into a plurality of portions and in which an insulating material is disposed. In an embodiment, the wearable electronic device may include a second segmentation portion which segments the second frame into a plurality of portions and in which an insulating material is disposed. In an embodiment, the wearable electronic device may include a printed circuit board disposed in the housing. In an embodiment, the wearable electronic device may include a wireless communication circuit disposed on the printed circuit board and electrically connected to the first frame and the second frame to transmit or receive a wireless signal in at least one frequency band. In an embodiment, the wearable electronic device may include a first antenna member electrically connecting the wireless communication circuit and the first frame. In an embodiment, the wearable electronic device may include a second antenna member electrically connecting the wireless communication circuit and the second frame.

### [Advantageous Effects of Invention]

According to an embodiment disclosed herein, a housing may be segmented into a plurality of portions. For example, the housing may include a first frame including a conductive material, a second frame including a conductive material, and a lateral member disposed between the first frame and the second frame and including a nonconductive material. The first frame and the second frame may be electrically connected to a wireless communication circuit of a printed circuit board and may be used as antenna radiators. Accordingly, the wearable electronic device may transmit or receive wireless communication signals in various frequency bands by segmenting the housing into a plurality of portions.

In addition, as the lateral member including a nonconductive material is positioned between the first frame and the second frame, a current flow generated through a space between the first frame and the second frame may be smooth during wireless communication through the first frame and/or the second frame. Accordingly, a certain level of antenna radiation performance may be secured in a predetermined resonant frequency band through the first frame and the second frame.

Advantageous effects obtainable from the disclosure are not limited to the above-mentioned effects, and other effects not mentioned herein will be clearly understood from the following description by those skilled in the art to which the disclosure pertains.

### [Brief Description of Drawings]

With regard to the description of the drawings, the same or like reference signs may be used for the same or like elements.
FIG. 1 is a block diagram illustrating an electronic device in a network environment according to various embodiments.
FIG. 2 is a front perspective view of a wearable electronic device according to various embodiments of the disclosure.
FIG. 3 is a rear perspective view of the wearable electronic device according to an embodiment of the disclosure.
FIG. 4 is an exploded perspective view of the wearable electronic device illustrated in FIG. 2.
FIG. 5A is a front perspective view of a housing of a wearable electronic device according to an embodiment of the disclosure.
FIG. 5B is an exploded perspective view of the housing according to an embodiment of the disclosure.
FIGS. 6A, 6B, and 7 are views each illustrating an arrangement structure of antennas according to an embodiment of the disclosure.
FIG. 8 is a configuration diagram of a switching circuit according to an embodiment of the disclosure.
FIG. 9 is a graph illustrating radiation performance of antennas in the antenna arrangement structure of FIGS. 6A and 6B.
FIGS. 10A to 10D are cross-sectional views taken along line A-A of FIG. 5A and illustrate a connection structure between the first frame and the wireless communication circuit and a connection structure between the second frame and the wireless communication circuit.

### [Mode for the Invention]

In the following description, various embodiments of the disclosure will be described with reference to the accompanying drawings. It is to be understood that various embodiments of the disclosure and terms for describing the embodiments are not intended to limit the technical features disclosed herein to specific embodiments, and that the embodiments include various modifications, equivalents, or alternatives of the corresponding embodiments.

With regard to the description of the drawings, similar reference numerals may be used for similar or relevant elements. The singular form of a noun corresponding to an item may include one item or a plurality of items unless the context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

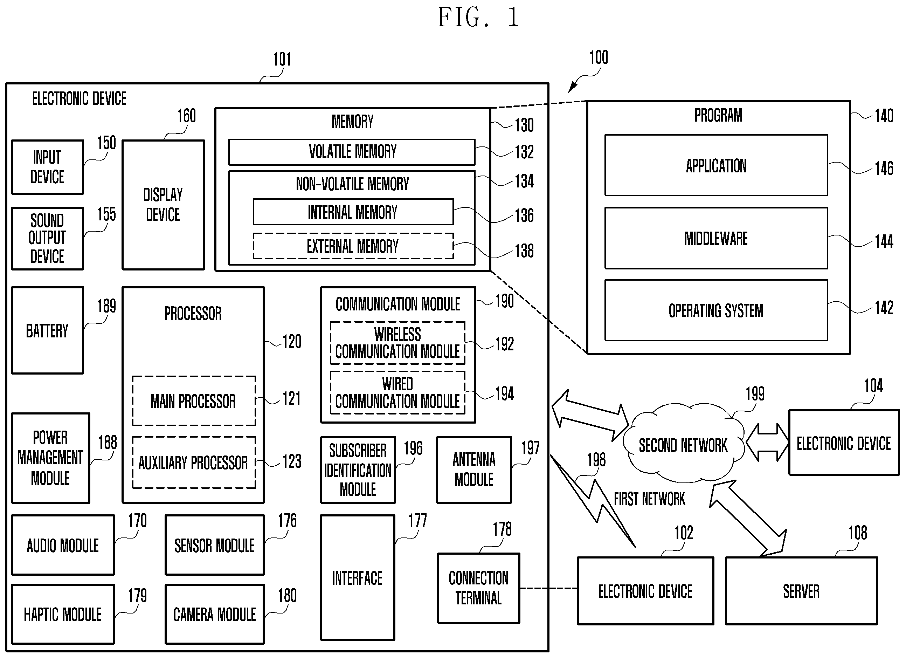

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

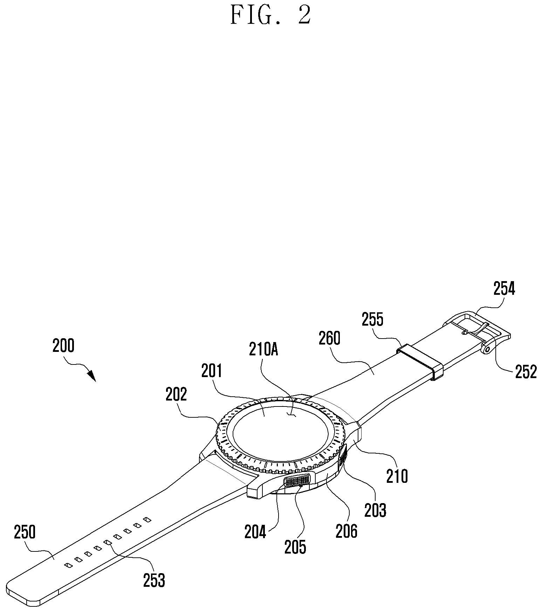

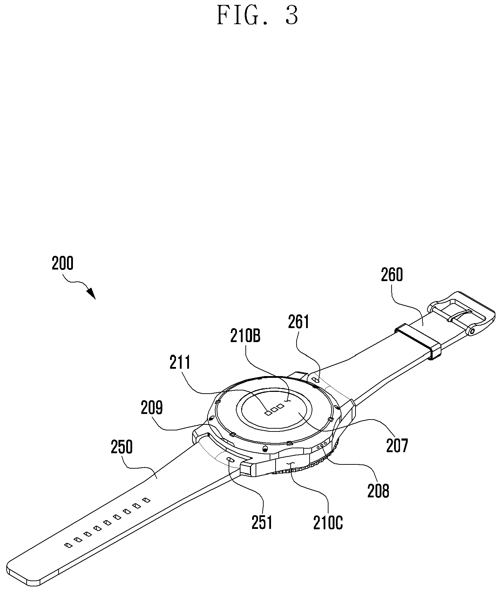

FIG. 2 is a front perspective view of a wearable electronic device according to an embodiment of the disclosure. FIG. 3 is a rear perspective view of the wearable electronic device according to an embodiment of the disclosure.

Referring to FIGS. 2 and 3, the electronic device 200 according to an embodiment may include a housing 210 including a first surface (or front surface) 210A, a second surface (or rear surface) 210B, and a lateral surface 210C surrounding a space between the first surface 210A and the second surface 210B, and fastening members 250 and 260 connected to at least a portion of the housing 210 and configured to detachably fasten the electronic device 200 to a part of a user's body (e.g., a wrist or ankle). In another embodiment (not illustrated), the housing 210 may also refer to a structure that forms part of the first surface 210A, the second surface 210B, and the lateral surface 210C of FIG. 2. According to an embodiment, the first surface 210A may be formed by a front surface plate 201 at least a portion of which is substantially transparent (e.g., a glass plate including various coating layers, or a polymer plate). The second surface 210B may be formed by a rear surface plate 207 that is substantially opaque. The rear surface plate 207 may be formed of, for example, coated or colored glass, ceramic, polymer, metal (e.g., aluminum, stainless steel (STS), or magnesium), or a combination of at least two of the foregoing materials. The lateral surface 210C may be formed by a lateral surface bezel structure (or a "lateral member") 206 coupled to the front surface plate 201 and the rear surface plate 207 and including metal and/or polymer. In some embodiments, the rear surface plate 207 and the side bezel surface structure 206 may be integrally formed and may include the same material (e.g., a metal material such as aluminum). The fastening members 250 and 260 may be formed of various materials and in various forms. The fastening members 250 and 260 may be formed as an integrated type or as a plurality of unit links movable with respect to each other by using woven fabric, leather, rubber, urethane, metal, ceramic, or a combination of at least two of the materials.

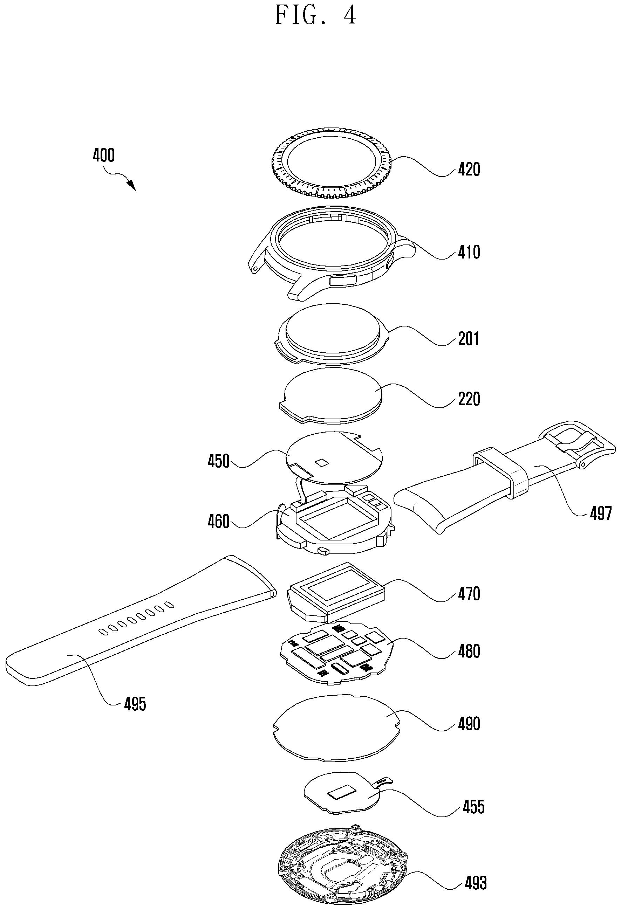

According to an embodiment, the electronic device 200 may include at least one of a display 220 (see FIG. 4), audio modules 205 and 208, a sensor module 211, key input devices 202, 203, and 204, or a connector hole 209. In some embodiments, the electronic device 200 may omit at least one of the components (e.g., the key input devices 202, 203, and 204, the connector hole 209, or the sensor module 211) or may additionally include another component.

The display 220 may be exposed through, for example, a substantial portion of the front surface plate 201. The display 220 may have a shape corresponding to the shape of the front surface plate 201 and may have various shapes such as a circular shape, an elliptical shape, or a polygonal shape. The display 220 may be coupled to or disposed adjacent to touch sensing circuitry, a pressure sensor capable of measuring an intensity or pressure of a touch, and/or a fingerprint sensor.

The audio modules 205 and 208 may include a microphone hole 205 and a speaker hole 208. A microphone for acquiring an external sound may be disposed in the microphone hole 205, and in some embodiments, a plurality of microphones may be disposed so as to detect a direction of sound. The speaker hole 208 may be used as an external speaker and a receiver for a call.

The sensor module 211 may generate an electrical signal or a data value corresponding to an operating state inside the electronic device 200 or an external environmental state. The sensor module 211 may include, for example, a biometric sensor module 211 (e.g., an HRM sensor) disposed on the second surface 210B of the housing 210. The electronic device 200 may further include a sensor module (not illustrated), for example, at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 210A of the housing 210 and rotatable in at least one direction, and/or side key buttons 202 and 203 disposed on the lateral surface 210C of the housing 210. The wheel key may have a shape corresponding to a shape of the front plate 202. In another embodiment, the electronic device 200 may not include some or all of the above-mentioned key input devices 202, 203, and 204, and the key input devices 202, 203, and 204 not included may be implemented in another form, such as soft keys on the display 220. The connector hole 209 may accommodate a connector (e.g., a USB connector) configured to transmit and receive power and/or data to and from an external electronic device, and may include another connector hole (not illustrated) capable of accommodating a connector configured to transmit and receive an audio signal to and from the external electronic device. The electronic device 200 may further include, for example, a connector cover (not illustrated) that covers at least a portion of the connector hole 209 and blocks introduction of external foreign substances into the connector hole.

The fastening members 250 and 260 may be detachably fastened to at least a portion of the housing 210 using locking members 251 and 261. The fastening members 250 and 260 may include one or more of a fixing member 252, a fixing member fastening hole 253, a band guide member 254, or a band fixing ring 255.

The fixing member 252 may be configured to fix the housing 210 and the fastening members 250 and 260 to a part of a user's body (e.g., a wrist or ankle). The fixing member fastening hole 253 may fix the housing 210 and the fastening members 250 and 260 to a part of the user's body corresponding to the fixing member 252. The band guide member 254 may be configured to limit a movement range of the fixing member 252 when the fixing member 252 is fastened to the fixing member fastening hole 253, so that the fastening members 250 and 260 may be closely fastened to a part of the user's body. The band fixing ring 255 may limit a movement range of the fastening members 250 and 260 in a state in which the fixing member 252 and the fixing member fastening hole 253 are fastened.

FIG. 4 is an exploded perspective view of the wearable electronic device illustrated in FIG. 2.

Referring to FIG. 4, the electronic device 400 may include a lateral surface bezel structure 410, a wheel key 420, a front surface plate 201, a display 220, a first antenna 450, a second antenna 455, a support member 460 (e.g., a bracket), a battery 470, a printed circuit board 480, a sealing member 490, a rear surface plate 493, and fastening members 495 and 497. At least one of the components of the electronic device 400 may be the same as or similar to at least one of the components of the electronic device 200 of FIG. 2 or FIG. 3, and a redundant description thereof will be omitted below. The support member 460 may be disposed inside the electronic device 400 and connected to the lateral surface bezel structure 410, or may be formed integrally with the lateral surface bezel structure 410. The support member 460 may be formed of, for example, a metal material and/or a nonmetal material (e.g., a polymer). The display 220 may be coupled to one surface of the support member 460, and the printed circuit board 480 may be coupled to the other surface of the support member 460. A processor (e.g., the processor 120 of FIG. 1), memory (e.g., the memory 130 of FIG. 1), and/or an interface (e.g., the interface 177 of FIG. 1) may be mounted on the printed circuit board 480. The processor may include, for example, one or more of a central processing unit, an application processor, a graphic processing unit (GPU), an application processor, a signal processing unit, and a communication processor.

The memory may include, for example, volatile memory or non-volatile memory. The interface may include, for example, a high-definition multimedia interface (HDMI), a universal serial bus (USB) interface, an SD card interface, and/or an audio interface. The interface may, for example, electrically or physically connect the electronic device 400 to an external electronic device, and may include a USB connector, an SD card/an MMC connector, or an audio connector.

The battery 470, as a device for supplying power to at least one component of the electronic device 400, may include, for example, a non-rechargeable primary battery, a rechargeable secondary battery, or a fuel cell. At least a portion of the battery 470 may be disposed, for example, on substantially the same plane as the printed circuit board 480. The battery 470 may be integrally disposed inside the electronic device 200, or may be detachably disposed with respect to the electronic device 200.

The first antenna 450 may be disposed between the display 220 and the support member 460. The first antenna 450 may include, for example, a near field communication (NFC) antenna, a wireless charging antenna, and/or a magnetic secure transmission (MST) antenna. The first antenna 450 may, for example, perform short-range communication with an external device, wirelessly transmit or receive power required for charging, and transmit a magnetic-based signal including a short-range communication signal or payment data. In another embodiment, an antenna structure may be formed by a portion of the lateral surface bezel structure 410 and/or the support member 460, or a combination thereof.

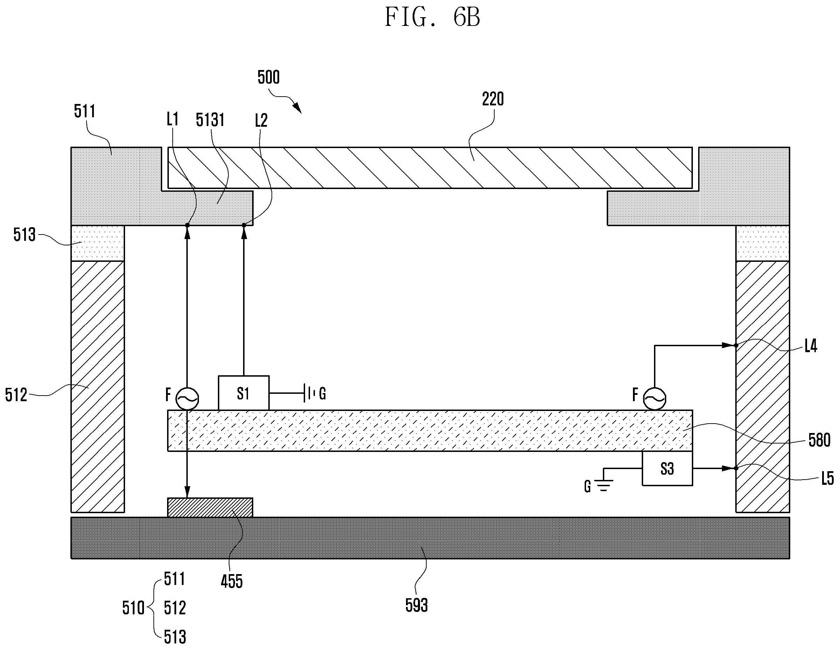

In an embodiment, the second antenna 455 (e.g., the second antenna 455 of FIG. 4 and/or the second antenna 455 of FIG. 6B) may be disposed between the printed circuit board 480 and the rear surface plate 493. The second antenna 455 may include, for example, a near field communication (NFC) antenna, a wireless charging antenna, and/or a magnetic secure transmission (MST) antenna. The second antenna 455 may, for example, perform short-range communication with an external device, wirelessly transmit or receive power required for charging, and transmit a magnetic-based signal including a short-range communication signal or payment data. In another embodiment, an antenna structure may be formed by a portion of the lateral surface bezel structure 410 and/or the rear surface plate 493, or a combination thereof.

The sealing member 490 may be positioned between the lateral surface bezel structure 410 and the rear surface plate 493. The sealing member 490 may be configured to block moisture and foreign substances introduced from the outside into a space surrounded by the lateral surface bezel structure 410 and the rear surface plate 493.

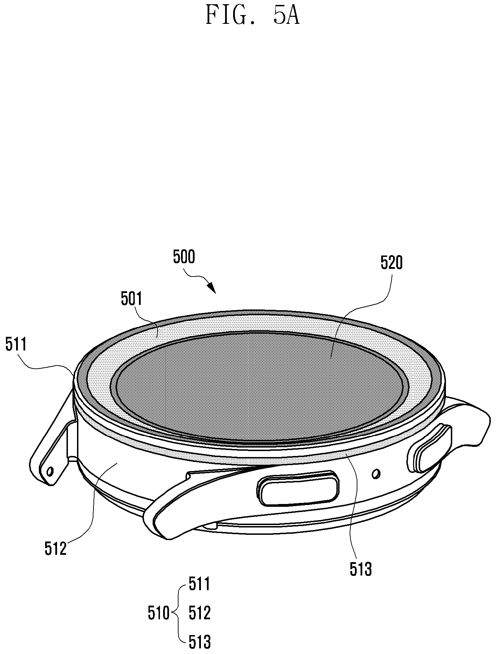

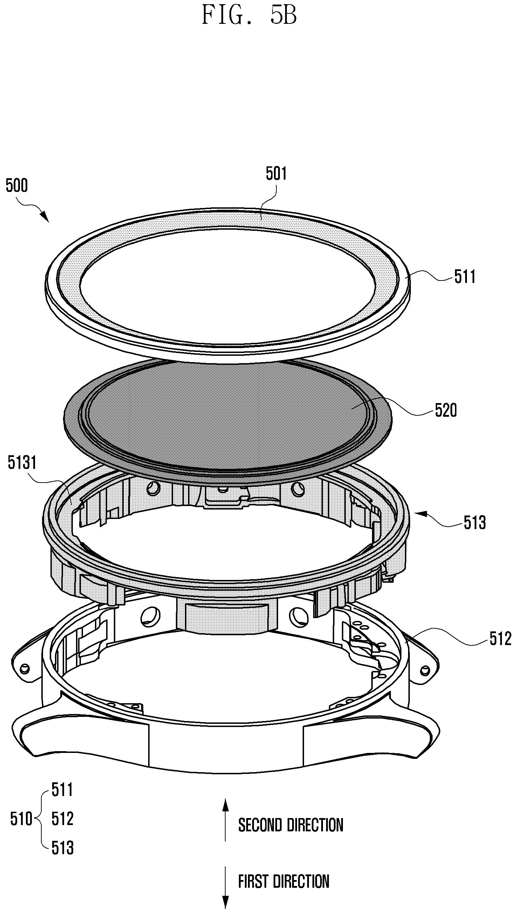

FIG. 5A is a front perspective view of a housing of a wearable electronic device according to an embodiment of the disclosure. FIG. 5B is an exploded perspective view of the housing according to an embodiment of the disclosure.

According to an embodiment, as illustrated in FIGS. 5A and 5B, the housing 510 of a wearable electronic device 500 (e.g., the electronic device 101 of FIG. 1, the electronic device 200 of FIG. 2, and/or the electronic device 400 of FIG. 4) (e.g., the housing 210 of FIG. 2, the lateral surface bezel structure 206 of FIG. 2, and/or the lateral surface bezel structure 410 of FIG. 4) may include a first frame 511, a second frame 512, and a lateral member 513. In an embodiment, the first frame 511, the second frame 512, and the lateral member 513 may constitute an external appearance of the wearable electronic device 500 together with a rear surface plate 593 (e.g., the rear surface plate 593 of FIG. 6B and/or the rear surface plate 493 of FIG. 4). In an embodiment, the first frame 511 and the second frame 512 may be spaced apart from each other. For example, the second frame 512 may be spaced apart from the first frame 511 in a first direction (e.g., the first direction of FIG. 5B). In an embodiment, the lateral member 513 may be disposed between the first frame 511 and the second frame 512. In other words, the housing 510 may be segmented into the first frame 511 and the second frame 512 by disposing the lateral member 513 between the first frame 511 and the second frame 512.

In an embodiment, an outer peripheral portion (edge) of the display 520 (e.g., the display of FIG. 4) may be covered by the bezel portion 501. In an embodiment, the bezel portion 501 may include a nonconductive material and/or a conductive material. In an embodiment, the bezel portion 501 may be formed separately from the first frame 511 and may be disposed inside the first frame 511 to cover the outer peripheral portion of the display 520. In an embodiment, the bezel portion 501 may be a portion of the first frame 511.

In an embodiment, at least a portion of the display 520 may be supported by a seating portion 5131 of the lateral member 513 and/or the first frame 511. In an embodiment, the outer peripheral portion of the display 520 may be supported by the lateral member 513. In an embodiment, the seating portion 5131 may have a shape extending toward an inner space along an outer periphery of the lateral member 513. In an embodiment, the outer peripheral portion of the display 520 may be surrounded by the first frame 511, and at least a portion of the display 520 may be supported by the first frame 511. In an embodiment, a portion of the display 520 may be supported by the first frame 511, and another portion of the display 520 may be supported by the seating portion 5131 of the lateral member 513.

In an embodiment, when the display 520 is disposed on the lateral member 513, a phenomenon in which the display 520 is separated from the first frame 511 due to corrosion of the first frame 511 may be prevented, compared to a case in which the display 520 is disposed only on the first frame 511.

According to an embodiment, the frames 511 and 512 and the lateral member 513 of the housing 510 may be formed of different materials. In an embodiment, the first frame 511 and the second frame 512 may be formed of a conductive material (e.g., metal). For example, the first frame 511 and the second frame 512 may be formed of an alloy including at least one of aluminum, stainless steel (STS, SUS), iron, magnesium, and titanium. In an embodiment, the lateral member 513 may be formed of a nonconductive material (e.g., nonmetal). For example, the lateral member 513 may be formed of a nonmetal material, such as synthetic resin, ceramic, polymer, or engineering plastic. In addition, the first frame 511 and the second frame 512 may be formed of various types of conductive materials. In addition, the lateral member 513 may be formed of various types of nonconductive materials.

According to an embodiment, the first frame 511, the second frame 512, and the lateral member 513 may be coupled in various manners. In an embodiment, the housing 510 may be formed in a structure assembled in the order of the first frame 511, the lateral member 513, and the second frame 512 through a double injection molding process. Accordingly, the first frame 511, the lateral member 513, and the second frame 512 may be coupled to each other through the double injection molding process. The above-described method is merely an example, and the first frame 511, the second frame 512, and the lateral member 513 may be coupled through various methods, such as bonding using an adhesive, bonding through welding, or bonding using bolts.

According to an embodiment, the wearable electronic device 500 may include a printed circuit board 580 disposed inside the housing 510 (e.g., the printed circuit board 480 of FIG. 4 or the printed circuit board 580 of FIG. 6B). In an embodiment, at least one wireless communication circuit F (e.g., the communication module 190 of FIG. 1 or the wireless communication module 192 of FIG. 1) may be included on the printed circuit board 580. According to an embodiment, the wireless communication circuit F may include a radio frequency IC (RFIC). As described below, the wireless communication circuit F may transmit a feeding signal to the first frame 511 and the second frame 512 of the housing 510 electrically connected through a feeding path. Accordingly, the first frame 511 and the second frame 512 may operate as antennas through the wireless communication circuit F. In an embodiment, the radio frequency IC (RFIC) may transmit a wireless signal (RF signal) processed by the communication module 190 to the first frame 511 and the second frame 512, or may transmit wireless signals received from the first frame 511 and the second frame 512 to the communication module.

In an embodiment, the first frame 511 and the second frame 512 of the housing 510 may be antenna radiators electrically connected to the wireless communication circuit F and configured to operate as antennas. In an embodiment, when the first frame 511 and the second frame 512 operate as antennas, a current distribution may be concentrated in a space between the first frame 511 and the second frame 512. As the lateral member 513 including a nonconductive material is positioned between the first frame 511 and the second frame 512, a current flow generated through a space between the first frame 511 and the second frame 512 may be smooth during wireless communication through the first frame 511 and/or the second frame 512. Accordingly, a certain level of antenna radiation performance may be secured in a predetermined resonant frequency band through the first frame 511 and the second frame 512.

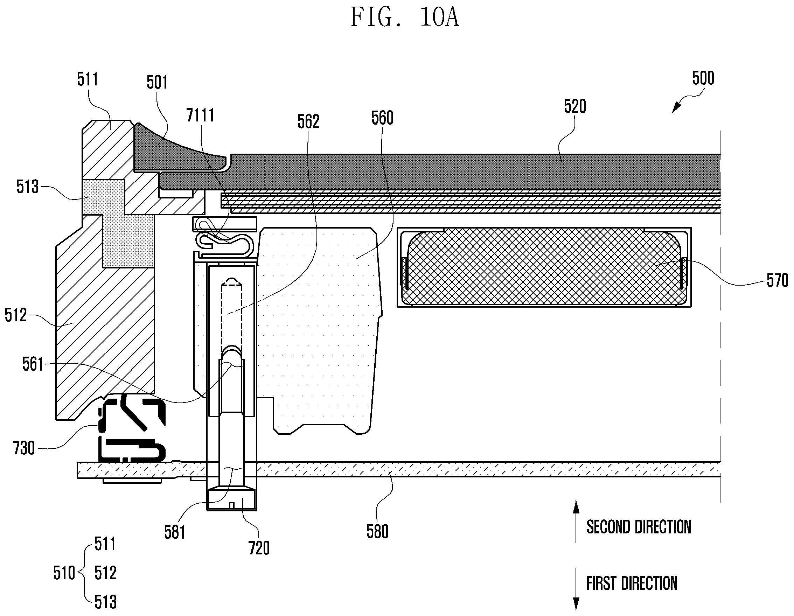

In an embodiment, a support member 560 (e.g., a bracket) (e.g., the support member 460 of FIG. 4 and/or the support member 560 of FIG. 10A) may be disposed inside the housing 510. In an embodiment, the support member 560 may be disposed between the first frame 511 and the printed circuit board 580 inside the housing 510. For example, the support member 560 may be located in a second direction opposite to the first direction with respect to the printed circuit board 580. In an embodiment, the support member 560 may be formed integrally with the lateral member 513.

In an embodiment, the wearable electronic device 500 may include antenna members (e.g., the first antenna member 711, 712, or 713 and the second antenna member 730) electrically connecting the wireless communication circuit F to each of the first frame 511 and the second frame 512 such that the first frame 511 and the second frame 512 may operate as antennas. In an embodiment, the wireless communication circuit F may be electrically connected to the first frame 511 through the first antenna member 711, 712, or 713 (e.g., a conductive clip (e.g., a C-clip), a conductive socket, or a conductive adhesive member). In an embodiment, the wireless communication circuit F may be electrically connected to the second frame 512 through the second antenna member 730 (e.g., a conductive clip, a conductive socket, or a conductive adhesive member). A structure in which the wireless communication circuit F is electrically connected to the first frame 511 and the second frame 512 will be described in detail below with reference to FIGS. 10A to 10D.

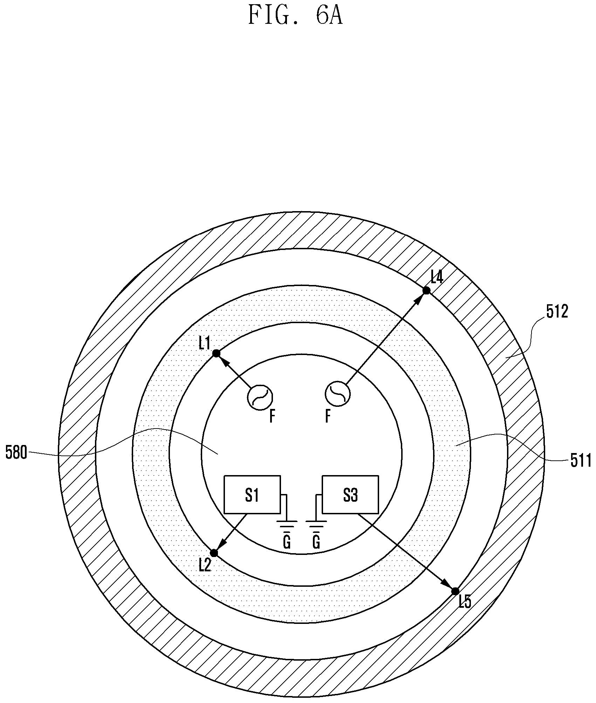

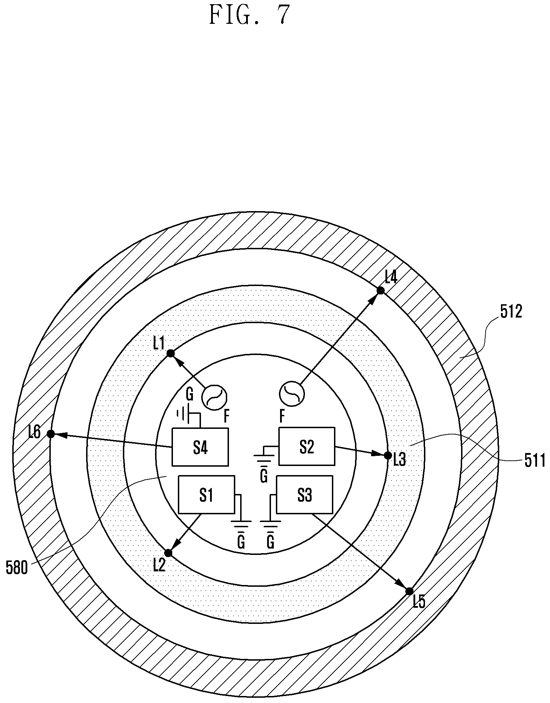

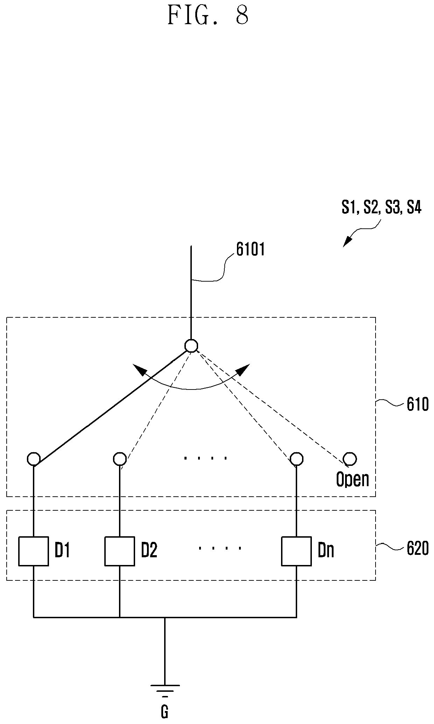

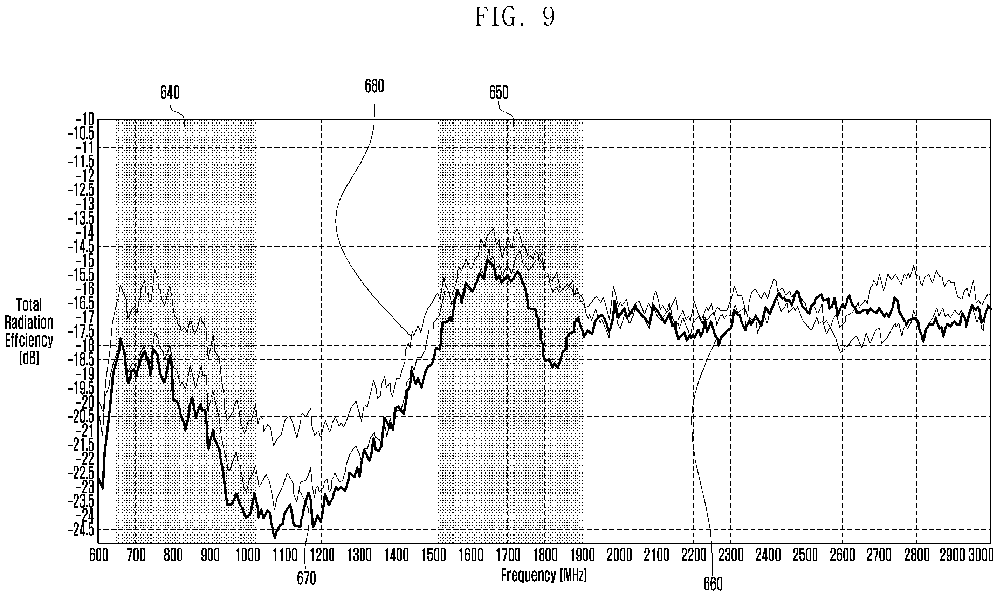

FIGS. 6A, 6B, and 7 are views each illustrating an arrangement structure of antennas according to an embodiment of the disclosure. FIG. 8 is a configuration diagram of a switching circuit according to an embodiment of the disclosure. FIG. 9 is a graph illustrating radiation performance of antennas in the antenna arrangement structure of FIGS. 6A and 6B.

According to an embodiment, the first frame 511 and the second frame 512 of the housing 510 (e.g., the housing 210 of FIG. 2, the lateral surface bezel structure 206 of FIG. 2, and/or the lateral surface bezel structure 410 of FIG. 4) may be antenna radiators electrically connected to a wireless communication circuit F (e.g., the communication module 190 of FIG. 1 and/or the wireless communication module 192 of FIG. 1) disposed on the printed circuit board 580 (e.g., the printed circuit board 480 of FIG. 4) and configured to operate as antennas. In an embodiment, the first frame 511 and the second frame 512 may be electrically connected to the wireless communication circuit F and may operate as antennas operating in at least one band. In an embodiment, the wireless communication circuit F may transmit or receive wireless signals to or from an external electronic device in the same frequency band or different frequency bands through the first frame 511 and the second frame 512. In an embodiment, as the lateral member 513 including a nonconductive material is disposed between the first frame 511 and the second frame 512, the first frame 511 and the second frame 512 may not be electrically coupled to each other. Accordingly, the first frame 511 and the second frame 512 may transmit or receive wireless signals in a preset resonant frequency band.

According to an embodiment, as the first frame 511 and the second frame 512 are fed through the wireless communication circuit F, the first frame 511 and the second frame 512 may operate as antennas supporting frequency bands of 3G (generation), LTE (long term evolution), GPS (global positioning system), and/or Wi-Fi. For example, as the first frame 511 and the second frame 512 are fed through the wireless communication circuit F, the first frame 511 and the second frame 512 may transmit or receive wireless communication signals in a low band (e.g., about 600 MHz to 1 GHz), a mid band (e.g., about 1.5 GHz to 2.2 GHz), a high band (e.g., about 2.2 GHz to 2.7 GHz), a global positioning system (GPS) band (e.g., an L1 frequency, an L2 frequency, an L3 frequency, an L4 frequency, and an L5 frequency), and a Wi-Fi band (e.g., about 2.4 GHz and about 5 GHz to 6 GHz).

According to an embodiment, an electrical length of an antenna may be determined by a position of a ground point from a feeding point to which a wireless signal is fed (e.g., the first point L1 of the first frame 511 and the second point L5 of the second frame 512 of FIGS. 6A and 6B). The ground point may be a point through which a wireless signal exits the antenna (e.g., the second point L2 of the first frame 511 of FIG. 6A, the third point L3 of the first frame 511 of FIG. 7, the second point L5 of the second frame 512 of FIGS. 6A and 7, and/or the third point L6 of the second frame 512 of FIGS. 6A and 7). In an embodiment, a resonant frequency may be shifted by adjusting the electrical length of the antenna. For example, the first frame 511 and the second frame 512 may operate as multi-band antennas in different frequency bands according to a position of a feeding point connected to the wireless communication circuit F, the number of feeding points, a position of a ground point, and the number of ground points.

In an embodiment, referring to FIGS. 6A and 6B, the first frame 511 may be electrically connected to the wireless communication circuit F at a first point L1 (e.g., a feeding point). In an embodiment, the first frame 511 may be electrically connected to a ground G of the printed circuit board 580 at the second point L2 (e.g., a ground point). In an embodiment, an antenna length of the first frame 511 may be determined as an electrical length between the first point L1 and the second point L2. The first frame 511 may operate as a multi-band antenna in different frequency bands according to the number and positions of feeding points and ground points.

In an embodiment, referring to FIG. 7, in addition to the first point L1, which is a feeding point, and the second point L2, which is a ground point, the first frame 511 may be electrically connected to the ground G of the printed circuit board 580 at the third point L3 (e.g., a ground point). Accordingly, the first frame 511 may operate as a multi-band antenna in different frequency bands based on the number and positions of feeding points and ground points. The above-described structure is merely an example, and the positions and number of feeding points and ground points connected to the first frame 511 may be variously changed according to a resonant frequency band.

According to an embodiment (not illustrated) in the drawings, the first frame 511 may be segmented into a plurality of portions having different lengths. For example, the first frame 511 may include one or more segmentation portions. In an embodiment, the first frame 511 may be electrically segmented by disposing an insulating member in the segmentation portions. In an embodiment, the insulating members may include a material having low conductivity or a material having a low dielectric constant. The first frame 511 may be segmented into a plurality of portions having different lengths through the segmentation portions. In this way, the segmented first frame 511 may operate as an antenna in a plurality of different resonant frequency bands.

In an embodiment, referring to FIGS. 6A and 6B, the second frame 512 may be electrically connected to the wireless communication circuit F at a first point L4 (e.g., a feeding point). In an embodiment, the second frame 512 may be electrically connected to a ground G of the printed circuit board 580 at a second point L5 (e.g., a ground point). In an embodiment, an antenna length of the second frame 512 may be determined as an electrical length between the first point L4 and the second point L5 of the second frame 512. The second frame 512 may operate as a multi-band antenna in different frequency bands depending on the number and positions of feeding points and ground points.

In an embodiment, referring to FIG. 7, in addition to the first point L4, which is a feeding point, and the second point L5, which is a ground point, the second frame 512 may be electrically connected to the ground G of the printed circuit board 580 at a third point L6 (e.g., a ground point). Accordingly, the second frame 512 may operate as a multi-band antenna in different frequency bands based on the number and positions of feeding points and ground points. The above-described structure is merely an example, and the positions and number of feeding points and ground points connected to the second frame 512 may be variously changed according to a resonant frequency band.

According to an embodiment (not illustrated) in the drawings, the second frame 512 may be segmented into a plurality of portions having different lengths. For example, the second frame 512 may include one or more segmentation portions. In an embodiment, the second frame may be electrically segmented by disposing an insulating member in the segmentation portions. The second frame 512 may be segmented into a plurality of portions having different lengths through the segmentation portions. In this way, the segmented second frame 512 may operate as an antenna in a plurality of different resonant frequency bands.

According to an embodiment, as illustrated in FIGS. 6A, 6B, and 7, the wearable electronic device 500 may include a first switching circuit S1 disposed on an electrical path 6101 connecting the second point L2 of the first frame 511 and the ground G of the printed circuit board 580, a second switching circuit S2 disposed on an electrical path 6101 connecting the third point L3 of the first frame 511 and the ground G of the printed circuit board 580, a third switching circuit S3 disposed on an electrical path 6101 connecting the second point L5 of the second frame 512 and the ground G of the printed circuit board 580, and/or a fourth switching circuit S4 disposed on an electrical path 6101 connecting the third point L6 of the second frame 512 and the ground G of the printed circuit board 580.

In an embodiment, referring to FIG. 8 to be described below, the switching circuits S1, S2, S3, and S4 (e.g., variable circuits) may include a switch 610 for electrically connecting to at least one of a plurality of elements 620 (D1, D2, ..., Dn, open) or opening a corresponding electrical path 6101. In an embodiment, the plurality of elements may include capacitors and/or inductors having different element values.

In an embodiment, the switching circuits S1, S2, S3, and S4 may selectively connect the first frame 511 and/or the second frame 512 to at least one ground G. For example, referring to FIG. 8 to be described below, the switch 610 of the switching circuits S1, S2, S3, and S4 may electrically open the ground G connected to the first frame 511 and/or electrically open the ground G connected to the second frame 512 such that the first frame 511 and the second frame 512 may resonate in a predetermined frequency band. Accordingly, a position of a ground point of the first frame 511 and/or the second frame 512 may be varied, and thus an electrical length of the antenna may be varied. A resonant frequency may be changed by varying the electrical length of the antenna.

In an embodiment, a processor (e.g., the processor 120 of FIG. 1) may control the first switching circuit S1 and/or the second switching circuit S2 such that a resonant frequency band operating in the first frame 511 may be varied based on state information of the wearable electronic device 500. For example, the processor 120 may identify a signal strength of the wireless communication circuit F and adjust the resonant frequency band operating in the first frame 511 through the switching circuits S1 and S2 based on a certain level of signal strength not being secured in a specific resonant frequency band. In an embodiment, the processor 120 may adjust the resonant frequency band operating in the first frame 511 in order to optimize power consumption of the wearable electronic device 500. In an embodiment, the processor 120 may adjust the resonant frequency operating in the first frame 511 by controlling the switching circuits S1 and S2 so that a wireless communication signal may be transmitted or received in a specific band. In addition, the processor 120 may adjust the resonant frequency band operating in the first frame 511 by controlling the switching circuits S1 and S2 based on various state information of the wearable electronic device 500.

In an embodiment, referring to FIG. 7 and FIG. 8 to be described below, the first switching circuit S1 may open or connect an electrical path 6101 connecting the second point L2 of the first frame 511 and the ground G under control of the processor 120. The second switching circuit S2 may open or connect an electrical path 6101 connecting the third point L3 of the first frame 511 and the ground G under control of the processor 120. Accordingly, the wireless communication circuit F may vary a resonant frequency by changing an electrical length of the first frame 511 through the switching circuits S1, S2, S3, and S4.

In an embodiment, the processor 120 may control the third switching circuit S3 and/or the fourth switching circuit S4 such that a resonant frequency band operating in the second frame 512 may be varied based on state information of the wearable electronic device 500. For example, the processor 120 may identify a signal strength of the wireless communication circuit F and adjust the resonant frequency band operating in the second frame 512 through the switching circuits S3 and S4 based on a certain level of signal strength not being secured in a specific resonant frequency band. In an embodiment, the processor 120 may adjust the resonant frequency band operating in the second frame 512 in order to optimize power consumption of the wearable electronic device 500. In an embodiment, the processor 120 may adjust the resonant frequency operating in the second frame 512 by controlling the switching circuits S3 and S4 so that a wireless communication signal may be transmitted or received in a specific band. In addition, the processor 120 may adjust the resonant frequency band operating in the second frame 512 by controlling the switching circuits S3 and S4 based on various state information of the wearable electronic device 500.

In an embodiment, referring to FIG. 7, the third switching circuit S3 may open or connect an electrical path 6101 connecting the second point L5 of the second frame 512 and the ground G under control of the processor 120. The fourth switching circuit S4 may open or connect an electrical path 6101 connecting the third point L6 of the second frame 512 and the ground G under control of the processor 120. Accordingly, the wireless communication circuit F may vary a resonant frequency by changing an electrical length of the second frame 512 through the switching circuits S1, S2, S3, and S4.

The above-described number of switching circuits S1, S2, S3, and S4 is merely an example, and the number of switching circuits may be variously changed depending on the number of ground points connected to the first frame 511 and the number of ground points connected to the second frame 512.

FIG. 8 is a configuration diagram of a switching circuit according to an embodiment of the disclosure.

According to an embodiment, as illustrated in FIG. 8, at least one of the switching circuits S1, S2, S3, and S4 may include at least one switch 610 and/or a plurality of passive elements 620 (D1, D2, ... Dn, open) having different element values, and the plurality of passive elements 620 may be electrically connected to an electrical path 6101 or configured to disconnect the electrical path 6101 by the at least one switch 610. According to an embodiment, the plurality of passive elements 620 may include capacitors having various capacitance values and/or inductors having various inductance values. According to an embodiment, the at least one switch 610 may connect one passive element having a predetermined element value, among the plurality of passive elements, to the electrical path 6101 under control of a processor (e.g., the processor 120 of FIG. 1). In an embodiment, the switching circuits S1, S2, S3, and S4 may also short-circuit the corresponding electrical path 6101 through the switch 610. According to an embodiment, the at least one switch 610 may include a micro-electro mechanical systems (MEMS) switch. According to an embodiment, since the MEMS switch performs a mechanical switching operation by an internal metal plate, the MEMS switch may have complete turn-on/off characteristics and thus may not substantially affect a change in radiation characteristics of the antenna. In an embodiment, the at least one switch 610 may include a single pole single throw (SPST) switch, a single pole double throw (SPDT) switch, or a switch including three or more throws.

FIG. 9 is a graph illustrating radiation performance of antennas in the antenna arrangement structure of FIGS. 6A and 6B.

According to an embodiment, FIG. 9 is a graph illustrating radiation performance of an antenna of the wearable electronic device 500 (e.g., the electronic device 101 of FIG. 1, the electronic device 200 of FIG. 2, and/or the electronic device 400 of FIG. 4) based on the number and positions of feeding points and ground points of the first frame 511 and the number and positions of feeding points and ground points of the second frame 512, as illustrated in FIGS. 6A and 6B. In an embodiment, the graph illustrating the radiation performance of the antenna of FIG. 9 may compare antenna radiation performance 660 in a comparative example in which the first frame 511 and the second frame 512 are integrally formed with antenna radiation performance 670 and 680 in a case in which the first frame 511 and the second frame 512 illustrated in FIG. 5A are physically segmented.

In an embodiment, referring to FIG. 9, it may be confirmed that the first frame 511 secures relatively high antenna radiation performance 670 in a low band region 640 (e.g., about 600 MHz to 1000 MHz) and a mid band region 650 (e.g., about 1500 MHz to 1900 MHz), compared to the antenna radiation performance 660 of the comparative example in which the first frame 511 and the second frame 512 are integrally formed.

In an embodiment, referring to FIG. 9, it may be confirmed that the second frame 512 secures relatively high antenna radiation performance 680 in the low band region 640 (e.g., about 600 MHz to 1000 MHz) and the mid band region 650 (e.g., about 1500 MHz to 1900 MHz), compared to the antenna radiation performance 660 of the comparative example in which the first frame 511 and the second frame 512 are integrally formed.

According to an embodiment of the disclosure, the housing 510 (e.g., the housing 210 of FIG. 2, the lateral surface bezel structure 206 of FIG. 2, and/or the lateral surface bezel structure 410 of FIG. 4) may be segmented into a plurality of portions. For example, in the housing 510, the first frame 511 and the second frame 512, each of which includes a conductive material, may be physically segmented by disposing the lateral member 513 between the first frame 511 and the second frame 512. The physically segmented first and second frames 511 and 512 may be used as antenna radiators by being electrically connected to the wireless communication circuit F. The wearable electronic device 500 may transmit or receive wireless communication signals in various frequency bands through the first frame 511 and the second frame 512.

FIGS. 10A to 10D are cross-sectional views taken along line A-A of FIG. 5A and illustrate a connection structure between the first frame 511 and the wireless communication circuit F and a connection structure between the second frame 512 and the wireless communication circuit F.

According to an embodiment, as illustrated in FIGS. 10A to 10D, the wearable electronic device 500 (e.g., the electronic device 101 of FIG. 1, the electronic device 200 of FIG. 2, and/or the electronic device 400 of FIG. 4) may include a first antenna member 711, 712, or 713 connecting the wireless communication circuit F and the first frame 511 so as to allow the first frame 511 to operate as an antenna, and a second antenna member 730 connecting the wireless communication circuit F and the second frame 512 so as to allow the second frame 512 to operate as an antenna.

In an embodiment, the second frame 512 may be electrically connected to the wireless communication circuit F through the second antenna member 730 (e.g., a conductive clip, a conductive socket, and/or a conductive adhesive member). For example, the second frame 512 may be fed by the wireless communication circuit F via the second antenna member 730. Hereinafter, a structure for electrically connecting the first frame 511 and the wireless communication circuit F will be described in detail.

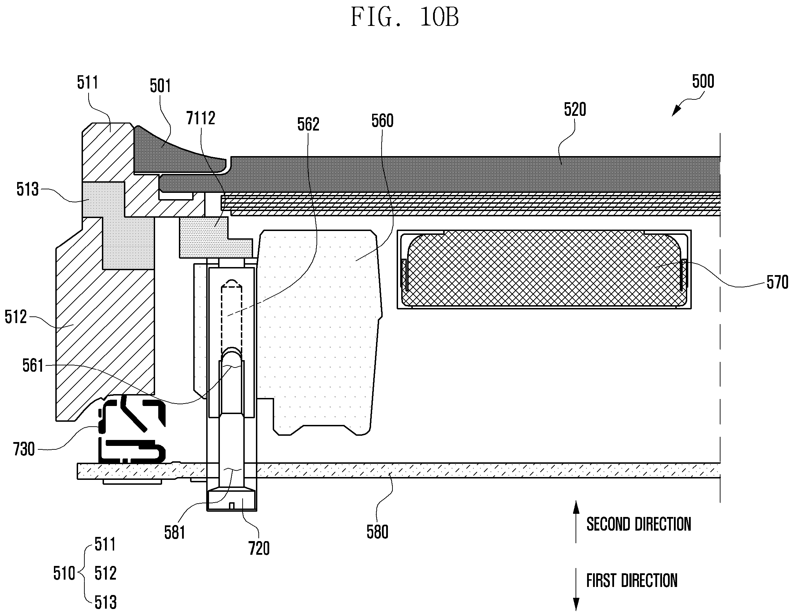

According to an embodiment, as illustrated in FIGS. 10A and 10B, the wireless communication circuit F disposed on the printed circuit board 580 (e.g., the wireless communication circuit F of FIG. 6A, FIG. 6B, and/or FIG. 7) may be electrically connected to the first frame 511 via the fixing member 720, the conductive part 562 of the support member 560 (e.g., the support member 460 of FIG. 4), and the first conductive connection member 711 (e.g., the first antenna member 711, 712, or 713). In an embodiment, the support member 560 may include a conductive part 562 including a conductive material. In an embodiment, the conductive part 562 may have a shape extending from a front surface of the support member 560 (e.g., a surface facing the display 520) to a rear surface of the support member 560 (e.g., a surface facing the printed circuit board 580 (e.g., the printed circuit board 480 of FIG. 4)). In an embodiment, the conductive part 562 may have a passage (e.g., the second connection hole 561) into which the fixing member 720 (e.g., a screw or a bolt) formed of a conductive material (e.g., metal) may be inserted. In an embodiment, the support member 560 and the printed circuit board 580 may be disposed inside the housing 510 (e.g., the housing 210 of FIG. 2, the lateral surface bezel structure 206 of FIG. 2, and/or the lateral surface bezel structure 410 of FIG. 4) such that the first connection hole 581 and the second connection hole 561 correspond to each other. In an embodiment, the fixing member 720 may be inserted into the first connection hole 581 of the printed circuit board 580 and the second connection hole 561 of the support member 560. The wireless communication circuit F of the printed circuit board 580 may be electrically connected to the conductive part 562 of the support member 560 through the fixing member 720. In an embodiment, referring to FIGS. 10A and 10B, the first conductive connection member 711 (e.g., the conductive clip 7111 of FIG. 10A or the conductive adhesive member 7112 of FIG. 10B) may be disposed between the support member 560 and the first frame 511 and may electrically connect the conductive part 562 of the support member 560 and the first frame 511. In an embodiment, referring to FIG. 10A, the first conductive connection member 711 may be the conductive clip 7111. In an embodiment, referring to FIG. 10B, the first conductive connection member 711 may be the conductive adhesive member 7112 (e.g., a tape). In addition, the first conductive connection member 711 may be changed to various mechanical structures electrically connecting the conductive part 562 of the support member 560, which includes a conductive material, and the first frame 511. Accordingly, the wireless communication circuit F may be electrically connected to the first frame 511 via the fixing member 720, the conductive part 562 of the support member 560, and the first conductive connection member 711. The first frame 511 may transmit or receive wireless signals in at least one resonant frequency band by being fed by the wireless communication circuit F.

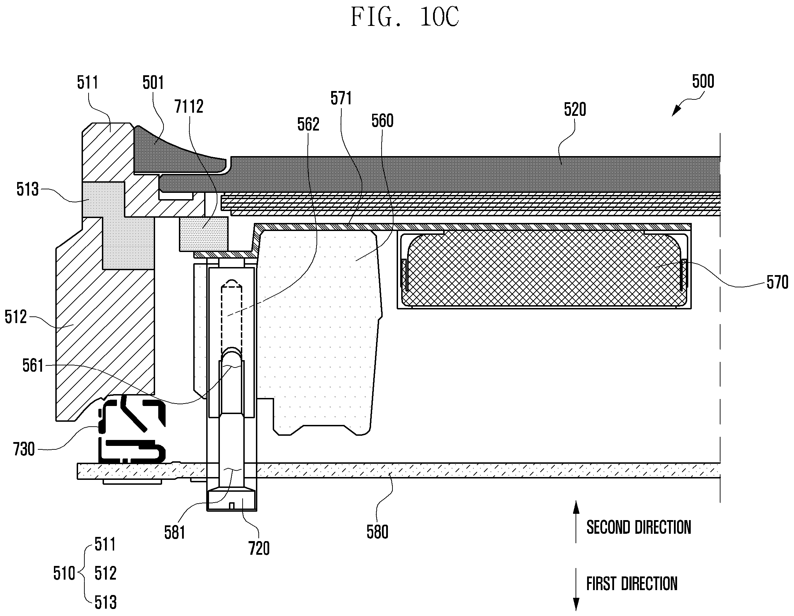

According to an embodiment, as illustrated in FIG. 10C, a battery plate 571 including a conductive material may be disposed on the support member 560. In an embodiment, the battery plate 571 may be fixed to the support member 560 to cover a battery 570 (e.g., the battery 470 of FIG. 4) between the support member 560 and the display 520 (e.g., the display 220 of FIG. 4). As the position of the battery 570 is fixed to the support member 560 by the battery plate 571, the battery 570 may not be separated from the support member 560.

In an embodiment, the first conductive connection member 711 (e.g., the conductive clip 7111 of FIG. 10A and/or the conductive adhesive member 7112 of FIG. 10C) may be disposed between the battery plate 571 and the first frame 511 and may be in contact with the battery plate 571 and the first frame 511. Accordingly, the wireless communication circuit F may be electrically connected to the first frame 511 via the fixing member 720, the conductive part 562 of the support member 560, the battery plate 571, and the first conductive connection member 711. The first frame 511 may transmit or receive wireless signals in at least one resonant frequency band by being fed by the wireless communication circuit F.

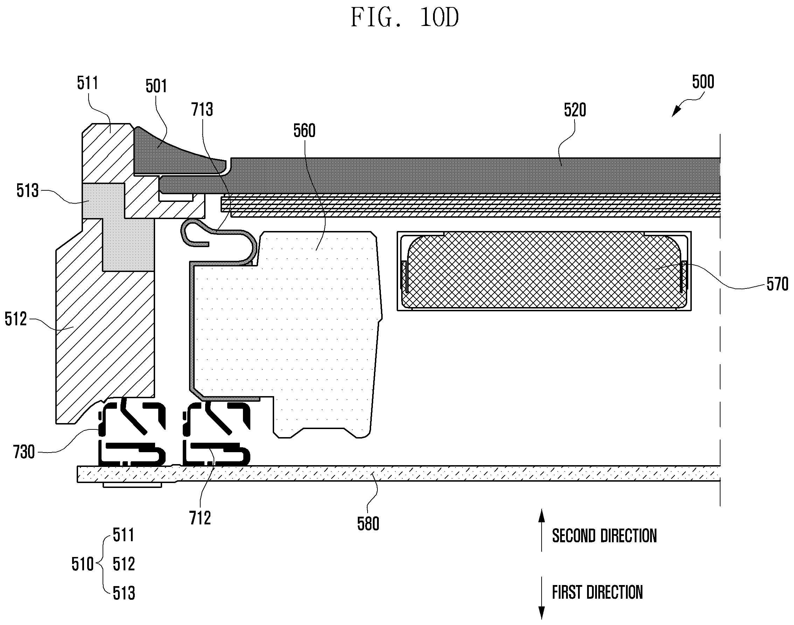

According to an embodiment, as illustrated in FIG. 10D, the support member 560 may include a front surface facing the display 520, a rear surface facing the printed circuit board 580, and a lateral surface surrounding a space between the front surface and the rear surface. In an embodiment, the wireless communication circuit F may be electrically connected to the first frame 511 via the lateral surface of the support member 560. In an embodiment, the first antenna member 711, 712, or 713 electrically connecting the wireless communication circuit F and the first frame 511 may include a second conductive connection member 712 and a third conductive connection member 713. In an embodiment, the second conductive connection member 712 (e.g., a conductive clip or a conductive socket) may be disposed on the printed circuit board 580 and electrically connected to the wireless communication circuit F. In an embodiment, the third conductive connection member 713 (e.g., a conductive clip) may have at least a portion disposed on the rear surface, the lateral surface, and the front surface of the support member 560, and may be in contact with the first frame 511 and the second conductive connection member 712. Accordingly, the wireless communication circuit F may be electrically connected to the first frame 511 via the second conductive connection member 712 and the third conductive connection member 713. The first frame 511 may transmit or receive wireless signals in at least one resonant frequency band by being fed by the wireless communication circuit F. In an embodiment, the support member 560 of FIG. 10D may not include the conductive part 562, but is not limited thereto.

According to an embodiment of the disclosure, a wearable electronic device 101, 200, 400, or 500 may include a housing 206, 210, 410, or 510 including a first frame 511 including a conductive material, a second frame 512 spaced apart from the first frame in a first direction and including a conductive material, and a lateral member 513 disposed between the first frame and the second frame and including a nonconductive material. In an embodiment, the wearable electronic device may include a printed circuit board 480 or 580 disposed in the housing. In an embodiment, the wearable electronic device may include a wireless communication circuit F or 192 disposed on the printed circuit board and electrically connected to the first frame and the second frame to transmit or receive a wireless signal in at least one frequency band. In an embodiment, the wearable electronic device may include a first antenna member 711, 712, or 713 electrically connecting the wireless communication circuit and the first frame. In an embodiment, the wearable electronic device may include a second antenna member 730 electrically connecting the wireless communication circuit and the second frame.

In an embodiment, the first frame may be electrically connected to at least one ground G. In an embodiment, the wireless communication circuit may transmit or receive wireless signals in a plurality of different frequency bands through the first frame.

In an embodiment, the wearable electronic device may include a switching circuit S1 or S2 disposed on an electrical path connecting the first frame and the at least one ground. In an embodiment, the wearable electronic device may further include at least one processor 120 configured to control the switching circuit, based on state information of the wearable electronic device.

In an embodiment, the second frame may be electrically connected to at least one ground G. In an embodiment, the wireless communication circuit may transmit or receive wireless signals in a plurality of different frequency bands through the second frame.

In an embodiment, the wearable electronic device may further include a switching circuit S3 or S4 disposed on an electrical path connecting the second frame and the at least one ground. In an embodiment, the wearable electronic device may further include at least one processor 120 configured to control the switching circuit, based on state information of the wearable electronic device.

In an embodiment, the wearable electronic device may further include a support member 460 or 560 including a conductive part 562 and disposed in the housing to be located in a second direction opposite to the first direction with respect to the printed circuit board.

In an embodiment, the support member may be formed integrally with the lateral member of the housing.

In an embodiment, the wearable electronic device may further include a first connection hole 581 formed in the printed circuit board. In an embodiment, the wearable electronic device may further include a second connection hole 561 formed in the conductive part of the support member and corresponding to the first connection hole. In an embodiment, the wearable electronic device may further include a fixing member 720 passing through the first connection hole and the second connection hole and including a conductive material. In an embodiment, the first antenna member may include a first conductive connection member 711 electrically connecting the conductive part and the first frame.

In an embodiment, the first conductive connection member may be one of a conductive clip 7111 and a conductive adhesive member 7112 in contact with the conductive part of the support member and the first frame.

In an embodiment, the wearable electronic device may further include a battery plate 571 including a conductive material, covering a battery 470 or 570 of the wearable electronic device disposed on the support member, and having at least a portion in contact with the conductive part. In an embodiment, the first conductive connection member may be in contact with the first frame and the battery plate.

In an embodiment, the support member may include a front surface, a rear surface opposite to the front surface and facing the printed circuit board, and a lateral surface surrounding a space between the front surface and the rear surface. In an embodiment, the first antenna member may include a second conductive connection member 712 disposed on the printed circuit board and electrically connected to the wireless communication circuit, and a third conductive connection member 713 having at least a portion disposed on the lateral surface of the support member and in contact with the first frame and the second conductive connection member.

In an embodiment, the second antenna member may be one of a conductive clip and a conductive adhesive member.

In an embodiment, the wearable electronic device may further include a display 220 or 520 surrounded by the first frame and disposed on the lateral member.

In an embodiment, the first frame and the second frame may transmit or receive wireless signals in different frequency bands.

In an embodiment, the wireless communication circuit may transmit or receive a wireless signal in at least one of a low band, a mid band, and a high band through at least one of the first frame and the second frame.

According to an embodiment of the disclosure, a wearable electronic device 101, 200, 400, or 500 may include a housing 206, 210, 410, or 510 including a first frame 511 including a conductive material, a second frame 512 spaced apart from the first frame in a first direction and including a conductive material, and a lateral member 513 disposed between the first frame and the second frame and including a nonconductive material. In an embodiment, the wearable electronic device may include a first segmentation portion which segments the first frame into a plurality of portions and in which an insulating material is disposed. In an embodiment, the wearable electronic device may include a second segmentation portion which segments the second frame into a plurality of portions and in which an insulating material is disposed. In an embodiment, the wearable electronic device may include a printed circuit board 480 or 580 disposed in the housing. In an embodiment, the wearable electronic device may include a wireless communication circuit F or 192 disposed on the printed circuit board and electrically connected to the first frame and the second frame to transmit or receive a wireless signal in at least one frequency band. In an embodiment, the wearable electronic device may include a first antenna member 711, 712, or 713 electrically connecting the wireless communication circuit and the first frame. In an embodiment, the wearable electronic device may include a second antenna member 730 electrically connecting the wireless communication circuit and the second frame.

In an embodiment, the wearable electronic device may further include a plurality of switching circuits S1, S2, S3, and S4 disposed on an electrical path connecting the first frame and at least one ground G and an electrical path connecting the second frame and at least one ground. In an embodiment, the wearable electronic device may further include at least one processor 120 configured to control the plurality of switching circuits, based on state information of the wearable electronic device.

In an embodiment, the wearable electronic device may further include a support member 460 or 560 including a conductive part 562 and disposed in the housing to be located in a second direction opposite to the first direction with respect to the printed circuit board. In an embodiment, the wearable electronic device may further include a first connection hole 581 formed in the printed circuit board. In an embodiment, the wearable electronic device may further include a second connection hole 561 formed in the conductive part of the support member and corresponding to the first connection hole. In an embodiment, the wearable electronic device may further include a fixing member 720 passing through the first connection hole and the second connection hole and including a conductive material. In an embodiment, the first antenna member may include a first conductive connection member electrically connecting the conductive part and the first frame.

In an embodiment, the wearable electronic device may further include a battery plate 571 including a conductive material, covering a battery 470 or 570 of the wearable electronic device disposed on the support member, and having at least a portion in contact with the conductive part. In an embodiment, the first conductive connection member may be in contact with the battery plate and the first frame.

In an embodiment, the wearable electronic device may further include a support member 460 or 560 including a conductive part 562 and disposed in the housing to be located in a second direction opposite to the first direction with respect to the printed circuit board. In an embodiment, the support member may include a front surface, a rear surface opposite to the front surface and facing the printed circuit board, and a lateral surface surrounding a space between the front surface and the rear surface. In an embodiment, the first antenna member may include a second conductive connection member 712 disposed on the printed circuit board and electrically connected to the wireless communication circuit, and a third conductive connection member 713 having at least a portion disposed on the lateral surface of the support member and in contact with the first frame and the second conductive connection member.

According to an embodiment disclosed herein, the housing 510 may be segmented into a plurality of portions. For example, the housing 510 may include a first frame 511 including a conductive material, a second frame 512 including a conductive material, and a lateral member 513 disposed between the first frame and the second frame and including a nonconductive material. The first frame 511 and the second frame 512 may be electrically connected to a wireless communication circuit F (e.g., the communication module 190 of FIG. 1 and/or the wireless communication module 192 of FIG. 1) of the printed circuit board 580 and may be used as antenna radiators. Accordingly, the wearable electronic device 500 may transmit or receive wireless communication signals in various frequency bands by segmenting the housing into a plurality of portions.

In addition, as the lateral member 513 including a nonconductive material is positioned between the first frame 511 and the second frame 512, a current flow generated through a space between the first frame 511 and the second frame 512 may be smooth during wireless communication through the first frame 511 and/or the second frame 512. Accordingly, a certain level of antenna radiation performance may be secured in a predetermined resonant frequency band through the first frame 511 and the second frame 512.

It is to be understood that various embodiments of the disclosure and terms for describing the embodiments are not intended to limit the technical features disclosed herein to specific embodiments, and that the embodiments include various modifications, equivalents, or alternatives of the corresponding embodiments. With reagrd to the description of the drawings, the same or like reference signs may be used for the same or like elements. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

According to various embodiments, each component (e.g., a module or a program) of the above-described components may include a single entity or multiple entities, and some of the multiple entities may be separately disposed in different components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be understood that, in addition to the above-disclosed embodiments, the disclosure also contemplates and includes embodiments based on combinations of any two or more of the above-disclosed embodiments and embodiments including any combination of the above-described features. They are disclosed herein. That is, the absence of an explicit indication that two features may be combined or two embodiments may be combined does not mean that such combinations are not contemplated, but such combinations should be considered to be included herein.

## Claims

1. A wearable electronic device (101, 200, 400, 500) comprising:
a housing (206, 210, 410, 510) comprising a first frame (511) including a conductive material, a second frame (512) including a conductive material and spaced apart from the first frame in a first direction, and a lateral member (513) disposed between the first frame and the second frame and including a nonconductive material;
a printed circuit board (480, 580) disposed in the housing;
a wireless communication circuit (F, 192) disposed on the printed circuit board and electrically connected to the first frame and the second frame to transmit or receive a wireless signal in at least one frequency band;
a first antenna member (711, 712, 713) configured to electrically connect the wireless communication circuit and the first frame; and
a second antenna member (730) configured to electrically connect the wireless communication circuit and the second frame.

2. The wearable electronic device of claim 1, wherein the first frame is electrically connected to at least one ground (G), and
wherein the wireless communication circuit is configured to transmit or receive wireless signals in different frequency bands through the first frame.

3. The wearable electronic device of claim 2, comprising:
a switching circuit (S1, S2) disposed on an electrical path configured to connect the first frame and the at least one ground; and
at least one processor (120) configured to control the switching circuit, based on state information of the wearable electronic device.

4. The wearable electronic device of claim 1 or 2, wherein the second frame is electrically connected to at least one ground (G), and
wherein the wireless communication circuit is configured to transmit or receive wireless signals in different frequency bands through the second frame.

5. The wearable electronic device of claim 4, further comprising:
a switching circuit (S3, S4) disposed on an electrical path configured to connect the second frame and the at least one ground; and
at least one processor (120) configured to control the switching circuit, based on state information of the wearable electronic device.

6. The electronic device of claim 1, further comprising a support member (460, 560) including a conductive part (562) and disposed in the housing to be located in a second direction opposite to the first direction with respect to the printed circuit board.

7. The wearable electronic device of claim 6, wherein the support member is formed integrally with the lateral member of the housing.

8. The wearable electronic device of claim 6, further comprising:
a first connection hole (581) formed through the printed circuit board;
a second connection hole (561) formed through the conductive part of the support member and corresponding to the first connection hole; and
a fixing member (720) passing through the first connection hole and the second connection hole and including a conductive material,
wherein the first antenna member comprises a first conductive connection member (711) configured to electrically connect the conductive part and the first frame.

9. The wearable electronic device of claim 8, wherein the first conductive connection member corresponds to one of a conductive clip (7111) and a conductive adhesive member (7112) in contact with the conductive part of the support member and the first frame.

10. The wearable electronic device of claim 8, further comprising:
a battery plate (571) including a conductive material, configured to cover a battery (470, 570) of the wearable electronic device, which is disposed on the support member, and having at least a portion in contact with the conductive part,
wherein the first conductive connection member is in contact with the first frame and the battery plate.

11. The electronic device of claim 6, wherein the support member comprises a front surface, a rear surface opposite to the front surface and facing the printed circuit board, and a lateral surface configured to surround a space between the front surface and the rear surface, and
wherein the first antenna member comprises:
a second conductive connection member (712) disposed on the printed circuit board and electrically connected to the wireless communication circuit, and
a third conductive connection member (713) having at least a portion disposed on the lateral surface of the support member to be in contact with the first frame and the second conductive connection member.

12. The wearable electronic device of claim 1, wherein the second antenna member corresponds to one of a conductive clip and a conductive adhesive member.

13. The electronic device of claim 1, further comprising a display (220, 520) surrounded by the first frame and disposed on the lateral member.

14. The wearable electronic device of claim 1, wherein the first frame and the second frame are configured to transmit or receive wireless signals in different frequency bands.

15. The electronic device of claim 1, further comprising:
a first segmentation portion which segments the first frame into a plurality of portions and in which an insulating material is disposed; and
a second segmentation portion which segments the second frame into a plurality of portions and in which an insulating material is disposed.
